# EUROPÄISCHE PATENTSCHRIFT

(11) **EP 3 979 943 B1**
(45) Veröffentlichungstag und Bekanntmachung des Hinweises auf die Patenterteilung: **06.09.2023**
(21) Anmeldenummer: 20732504.4
(22) Anmeldetag: 27.05.2020
(51) Int. Cl.: A61C 1/08, A61C 7/10, A61C 7/12, A61C 8/00

(54) **IMPLANTATPLATTENVORRICHTUNG**
IMPLANT PLATE DEVICE
DISPOSITIF DE PLAQUE IMPLANTABLE

(30) Priorität: 07.06.2019 DE 102019115476
(43) Veröffentlichungstag der Anmeldung: 13.04.2022
(73) Patentinhaber: Tadman GmbH, 78594 Gunningen (DE)
(72) Erfinder: SCHMID, Edwin, 78333 Stockach (DE)
(74) Vertreter: Daub, Thomas
(86) Internationale Anmeldenummer: PCT/EP2020/064748
(87) Internationale Veröffentlichungsnummer: WO 2020/245007

(56) Entgegenhaltungen:
- WO-A2-2011/118969
- WO-A2-2012/023736
- US-A1- 2010 004 691
- US-A1- 2013 189 640

## Beschreibung

### Stand der Technik

Die Erfindung betrifft ein Regulierungssystem zur Korrektur von Zahn- und/oder Kieferstellungen.

Es ist bereits eine Implantatplattenvorrichtung mit einem Plattengrundkörper und mit zumindest einer in den Plattengrundkörper eingebrachten Fixierausnehmung, wie in US2013/189640 offenbart, welche zu einer Aufnahme einer Kieferschraube vorgesehen ist, die zu einer Fixierung des Plattengrundkörpers dazu vorgesehen ist, durch die Fixierausnehmung in einen Knochen, insbesondere einen Kieferknochen, eingeschraubt zu werden, vorgeschlagen worden. Die Aufgabe der Erfindung besteht insbesondere darin, eine gattungsgemäße Vorrichtung mit verbesserten Eigenschaften hinsichtlich einer Anbringbarkeit sowie einer Positionsgenauigkeit bereitzustellen. Die Aufgabe wird erfindungsgemäß durch die Merkmale des Anspruchs 1, während vorteilhafte Ausgestaltungen und Weiterbildungen der Erfindung den Unteransprüchen entnommen werden können.

### Vorteile der Erfindung

Die Erfindung geht aus von einer Implantatplattenvorrichtung mit einem Plattengrundkörper, mit zumindest einer in den Plattengrundkörper eingebrachten Fixierausnehmung, welche zu einer Aufnahme einer Kieferschraube vorgesehen ist, die zu einer Fixierung des Plattengrundkörpers dazu vorgesehen ist, durch die Fixierausnehmung in einen Knochen, insbesondere einen Kieferknochen, eingeschraubt zu werden, und mit zumindest einem an die Fixierausnehmung angrenzenden Innengewinde.

Es wird vorgeschlagen, dass die Implantatplattenvorrichtung zumindest eine in den Plattengrundkörper eingebrachte Funktionsausnehmung zu einer Kopplung mit einem kieferorthopädischen Behandlungsapparat und/oder einer kombinierten Bohr- und/oder Insertionsschablone aufweist. Die Funktionsausnehmung ist sowohl zu einer Kopplung mit einer Bohr- und/oder Insertionsschablone, als auch zu einer späteren Kopplung mit einem kieferorthopädischen Behandlungsapparat vorgesehen.

Die Funktionsausnehmung weist abhängig von einem Einbauzustand des Plattengrundkörpers verschiedene Funktionen auf. Die Implantatplattenvorrichtung ist von einer Knochenplatte gebildet. Es sind verschiedene einem Fachmann als sinnvoll erscheinende Ausgestaltungen einer Knochenplatte denkbar, wie beispielsweise als eine neurochirurgische Knochenplatte. Bevorzugt ist die Knochenplatte jedoch von einer kieferorthopädischen Knochenplatte, wie insbesondere einer Mentoplate, einer Uniplate und/oder einer Alveolarplatte gebildet.

Die ist von einer Implantatschraube, insbesondere von einer BENEfit^{®}-Schraube, gebildet.

Die Implantatplattenvorrichtung ist insbesondere von einem aufgesetzten Kieferimplantat gebildet. Vorzugsweise ist die Implantatplattenvorrichtung insbesondere von einem temporären, kieferorthopädischen Implantat gebildet, welches mittels Kieferschraube in einem Kiefer befestigt ist.

Unter einer "Implantatplattenvorrichtung" soll in diesem Zusammenhang eine plattenförmige Vorrichtung verstanden werden, die zu einer Befestigung an einem Knochen vorgesehen ist. Die Implantatplattenvorrichtung ist von einer kieferorthopädischen Knochenplatte gebildet. Ferner soll in diesem Zusammenhang unter einem "Plattengrundkörper" ein plattenförmiger Grundkörper der Implantatplattenvorrichtung verstanden werden. Vorzugsweise weist der Plattengrundkörper eine Dicke von weniger als 6 mm, vorzugsweise von weniger als 4 mm und besonders bevorzugt von weniger als 2 mm auf. Bevorzugt weist der Plattengrundkörper eine Dicke von annähernd 1 mm auf. Unter einer "Fixierausnehmung" soll in diesem Zusammenhang eine Ausnehmung, eine Bohrung, verstanden werden, über welche die Implantatplattenvorrichtung an einem Knochen, insbesondere an einem Kieferknochen, fixiert werden kann. Die Fixierausnehmung ist Z von einer zumindest annähernd zylindrischen Durchgangsausnehmung gebildet, welche sich durch die Implantatplattenvorrichtung hindurch erstreckt. Unter einer "Funktionsausnehmung" soll in diesem Zusammenhang eine Ausnehmung, in eine Bohrung, verstanden werden, über welche mit der Implantatplattenvorrichtung ein kieferorthopädischer Behandlungsapparat und/oder eine Bohr- und/oder Insertionsschablone lösbar gekoppelt werden kann.

Die Funktionsausnehmung ist von einer zumindest annähernd zylindrischen Durchgangsausnehmung gebildet, welche sich durch den Plattengrundkörper hindurch erstreckt. Die Funktionsausnehmung ist zu einer funktionalen Erweiterung der Implantatplattenvorrichtung vorgesehen. Funktionsausnehmung dient Z zu einer lösbaren, modularen Kopplung verschiedener kieferorthopädischer Behandlungsapparate und/oder Bohr- und/oder Insertionsschablonen. Unter einem "kieferorthopädischen Behandlungsapparat" soll in diesem Zusammenhang eine Vorrichtung zur direkten kieferorthopädischen Behandlung verstanden werden. Vorzugsweise weist der kieferorthopädische Behandlungsapparat zumindest ein Befestigungselement, wie insbesondere ein Bracket und/oder ein orthodontisches Band oder andere Elemente zu Kopplung mit einem oder mehreren Zähnen auf. Ferner soll in diesem Zusammenhang unter einer "Bohr- und/oder Insertionsschablone"

ein Element verstanden werden, das zu einer positionsgenauen Einbringung der Kieferschrauben vorgesehen ist. Vorzugsweise ist die Bohr- und/oder Insertionsschablone von einer temporär verwendeten Schablone gebildet, welche zu einer positionsgenauen und winkelgenauen Vorbohrung in den Kiefer und die Einbringung der Kieferschrauben in einen Kiefer und die Implantatplattenvorrichtung vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Durch die erfindungsgemäße Ausgestaltung der Implantatplattenvorrichtung wird vorteilhaft positionsstabile Implantatplattenvorrichtung bereitgestell Eine vorteilhaft positionsgenaue und winkelgenaue Einbringung der Implantatplattenvorrichtung an einem Kiefer wird erreicht. Ferner wird eine vorteilhaft leicht einbringbare Implantatplattenvorrichtung bereitgestellt

Des Weiteren eine vorteilhaft modulare Nutzung der Implantatplattenvorrichtung erreicht. Es können abhängig von einer Anwendung verschiedene kieferorthopädische Behandlungsapparate lösbar mit der Implantatplattenvorrichtung gekoppelt werden. Insbesondere können so über einen Behandlungszeitraum verschiedene kieferorthopädische Behandlungsapparate hintereinander mit derselben Implantatplattenvorrichtung angewendet werden. Es kann insbesondere auf zusätzliche Kieferschrauben verzichtet werden. Ferner wird eine feste Verankerung im Knochen mittels der Implantatplattenvorrichtung erreicht.

Hierdurch kann insbesondere ein vorteilhaft hoher Zug ermöglicht werden, wie beispielsweise zur Distalisierung der Molaren.

Die Implantatplattenvorrichtung weist zumindest ein an die Funktionsausnehmung angrenzendes Innengewinde auf, welches zu einer winkelstabilen Kopplung mit einem kieferorthopädischen Behandlungsapparat und/oder einer Bohr- und/oder Insertionsschablone vorgesehen ist. Die Funktionsausnehmung ist zu einer winkelstabilen Kopplung mit einer Bohr- und/oder Insertionsschablone, als auch zu einer späteren Kopplung mit einem kieferorthopädischen Behandlungsapparat vorgesehen.

Das Innengewinde ist zu einer schraubenden Kopplung des kieferorthopädischen Behandlungsapparats und/oder der Bohr- und/oder Insertionsschablone mit der Funktionsausnehmung vorgesehen.

Der kieferorthopädische Behandlungsapparat und/oder die Bohr- und/oder Insertionsschablone kann in die Funktionsausnehmung eingeschraubt werden.

Dadurch kann eine vorteilhaft einfache und sichere Kopplung verschiedener kieferorthopädischer Behandlungsapparate und/oder Bohr- und/oder Insertionsschablonen erreicht werden. Es kann insbesondere eine lösbare Kopplung erreicht werden.

Des Weiteren wird vorgeschlagen, dass die Implantatplattenvorrichtung eine in den Plattengrundkörper eingebrachte weitere Fixierausnehmung, welche auf einer der Fixierausnehmung gegenüberliegenden Seite der Funktionsausnehmung angeordnet ist und welche zu einer Aufnahme einer Kieferschraube vorgesehen ist, die zu einer Fixierung der Implantatplattenvorrichtung dazu vorgesehen ist, durch die Fixierausnehmung in einen Knochen, insbesondere einen Kieferknochen, eingeschraubt zu werden, und zumindest ein an die weitere Fixierausnehmung angrenzendes Innengewinde aufweist. Vorzugsweise sind die Fixierausnehmung und die weitere Fixierausnehmung jeweils zu der Funktionsausnehmung benachbart angeordnet.

Bevorzugt erstrecken sich die Fixierausnehmung, die weitere Fixierausnehmung und die Funktionsausnehmung jeweils senkrecht zu einer Haupterstreckungsebene der Implantatplattenvorrichtung durch den Plattengrundkörper. Die Erstreckungsachsen der Fixierausnehmung, der weiteren Fixierausnehmung und der Funktionsausnehmung erstrecken sich vorzugsweise jeweils senkrecht zu einer Haupterstreckungsebene der Implantatplattenvorrichtung. Die Erstreckungsachsen der Fixierausnehmung, der weiteren Fixierausnehmung und der Funktionsausnehmung sind insbesondere in einer gemeinsamen Ebene angeordnet. Vorzugsweise entsprechen die Erstreckungsachsen der Fixierausnehmung, der weiteren Fixierausnehmung und der Funktionsausnehmung jeweils einer Bohrachse und/oder einer Rotationssymmetrieachse der jeweiligen Ausnehmung. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Dadurch kann insbesondere eine vorteilhaft positionsstabile Implantatplattenvorrichtung bereitgestellt werden. Es kann insbesondere eine vorteilhaft positionsgenaue und winkelgenaue Einbringung der Implantatplattenvorrichtung an einem Kiefer erreicht werden. Ferner kann eine vorteilhaft leicht einbringbare Implantatplattenvorrichtung bereitgestellt werden.

Es wird ferner vorgeschlagen, dass eine maximale Erstreckung des Plattengrundkörpers 20 mm beträgt. Vorzugsweise beträgt die maximale Erstreckung des Plattengrundkörpers, insbesondere entlang einer Haupterstreckungsrichtung der Implantatplattenvorrichtung, maximal 18 mm, vorzugsweise maximal 16 mm und besonders bevorzugt maximal 14 mm. Bevorzugt beträgt die maximale Erstreckung des Plattengrundkörpers, insbesondere entlang einer Haupterstreckungsrichtung der Implantatplattenvorrichtung, zumindest annähernd 12 mm. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Dadurch kann insbesondere eine vorteilhaft kompakte Implantatplattenvorrichtung bereitgestellt werden.

Ferner schlägt die Erfindung ein Implantatsystem mit einer Implantatplattenvorrichtung nach einem der vorhergehenden Ansprüche und mit zumindest einer Kieferschraube vor, welche dazu vorgesehen ist, die zu einer Fixierung der Implantatplattenvorrichtung an einem Knochen, insbesondere einem Kieferknochen, durch die Fixierausnehmung in einen Knochen, insbesondere einen Kieferknochen, eingeschraubt zu werden. Es wird weiter vorgeschlagen, dass die zumindest eine Kieferschraube zumindest ein erstes Gewinde zu einem Einschrauben in einen Knochen und zumindest ein zweites Gewinde zu einem Einschrauben in das an die Fixierausnehmung angrenzende Innengewinde der Implantatplattenvorrichtung aufweist, wobei eine Gewindesteigung des ersten Gewindes von einer Gewindesteigung des zweiten Gewindes verschieden ist. Vorzugsweise weist die Kieferschraube an ihrem Kopf ein Gewinde auf, welches jeweils dazu vorgesehen ist, in ein Innengewinde der Fixierausnehmung der Implantatplattenvorrichtung eingeschraubt zu werden. Bevorzugt weist das Gewinde des Kopfes der Kieferschraube eine von dem Hauptgewinde eines Gewindeschafts der Kieferschraube verschiedene Steigung auf. Bevorzugt führen die unterschiedlichen Gewindesteigungen zur Beibehaltung des Abstandes zur Anhebung oder Anpressung an die Schleimhaut oder den Knochen. Das erste Gewinde ist insbesondere von einem selbstbohrenden oder selbstschneidenden Knochengewinde gebildet, während das zweite Gewinde von einem speziellen Kopfgewinde gebildet ist, das in ein dazu passendes Gewinde in der Implantatplattenvorrichtung derart eingreift, dass es in einem bestimmen Winkelbereich zwischen Implantatlängsachse und Gewindelängsachse zu einer winkelstabilen Verbindung kommt. Das zweite Gewinde der Kieferschraube ist insbesondere dadurch gekennzeichnet, dass es bei der Insertion in den Kiefer derart in das Innengewinde der Implantatplattenvorrichtung eingreift, dass am Ende des Insertionsvorgangs eine kraft- und drehmomentschlüssige Verbindung hergestellt wird. Dadurch kann auf zusätzliche Verbindungselemente verzichtet werden. Optional kann der Schraubenkopf mit einem zusätzlichen Gewinde im Kopfbereich innen zur Aufnahme weiterer Elemente ausgestattet werden. Hierdurch kann insbesondere erreicht werden, dass die Kieferschraube mit der Befestigungseinheit und der Erweiterungseinheit eine feste Verbindung eingeht und dadurch eine sichere, dreidimensionale Konstruktion entsteht.

Es wird ferner vorgeschlagen, dass die Gewindesteigung des zweiten Gewindes der Kieferschraube größer ist als die Gewindesteigung des ersten Gewindes der Kieferschraube. Besonders bevorzugt weist das Gewinde des Kopfes der Kieferschraube eine höhere Gewindesteigung als das eigentliche Gewinde eines Gewindeschafts der Kieferschraube auf. Hierdurch kann durch das Eindrehen des Gewindes an dem Kopf der Kieferschraube in die Implantatplattenvorrichtung eine nachträgliche Anhebung der Implantatplattenvorrichtung und damit ein Anheben von der Schleimhaut des Patienten erreicht werden. Zusätzlich wäre es denkbar, bei entsprechender Gestaltung des Innengewindes der Implantatplattenvorrichtung und/oder des Gewindes des Kopfs der Kieferschraube eine leichte multi-direktionale Ausrichtung zu erzielen.

Des Weiteren geht die Erfindung aus von einer nicht beanspruchten Bohr- und/oder Insertionsschablone zu einem Anbringen des Implantatsystems an einem Kiefer, mit zumindest einem Ausrichtungselement zu einem Abstützen auf zumindest einem Zahn und mit zumindest einem mit dem Ausrichtungselement fest verbundenen Fixierelement, welches dazu vorgesehen ist, über die Funktionsausnehmung mit der Implantatplattenvorrichtung verbunden zu werden. Die Bohr- und/oder Insertionsschablone ist insbesondere von einer zahngetragenen Bohr- oder Insertationsschablone für die Implantatplattenvorrichtung gebildet. Die Bohr- und/oder Insertionsschablone dient insbesondere als Hilfsmittel zur Vorbohrung und Einbringung von Kieferschrauben, insbesondere Implantaten, in den Kiefer im Zusammenhang mit der Implantatplattenvorrichtung. Die Bohr- und/oder Insertionsschablone stützt sich insbesondere auf zumindest einer, insbesondere auf zumindest drei oder mehr dentalen Okklusionsflächen ab. Das Ausrichtungselement weist vorzugsweise auf zumindest einer Seite eine Zahnoberflächenkontur zu einer eindeutigen Positionierung auf einem Zahn auf. Bevorzugt ist das Ausrichtungselement insbesondere zu einer positionsgenauen Abstützung auf einem Zahn, insbesondere einem Molaren, vorgesehen. Das Ausrichtungselement dient insbesondere zu einer Positionierung und Abstützung der Bohr- und/oder Insertionsschablone in einem Kiefer. Zudem wäre denkbar, dass das zumindest ein Ausrichtungselement beispielsweise temporär mittels Kleben mit einem Zahn verbunden wird, um ein Verrutschen der Bohr- und/oder Insertionsschablone zu vermeiden. Unter einem "Ausrichtungselement" soll in diesem Zusammenhang insbesondere ein Element verstanden werden, über welches ein Bediener die Bohr- und/oder Insertionsschablone definiert relativ zu einem Kiefer positionieren kann. Insbesondere weist das Ausrichtungselement eine definierte, eindeutige Bezugsposition in einem Mundraum auf. Das Ausrichtungselement ist insbesondere zumindest teilweise individuell hergestellt und ist an die definierte, eindeutige Bezugsposition in dem Mundraum angepasst. Unter einem "Fixierelement" soll in diesem Zusammenhang insbesondere ein Element verstanden werden, über welches die Bohr- und/oder Insertionsschablone direkt mit dem Implantatsystem, insbesondere mit der Implantatplattenvorrichtung, verbunden werden kann. Insbesondere ist das Fixierelement dazu vorgesehen, mittels einer Schraub- und/oder Steckverbindung mit der Implantatplattenvorrichtung verbunden zu werden. Das Fixierelement ist insbesondere zu einer Herstellung einer lösbaren Verbindung mit der Implantatplattenvorrichtung vorgesehen. Das Fixierelement ist insbesondere in einem zentralen Abschnitt der Bohr- und/oder Insertionsschablone angeordnet und verfügt über eine Senkbohrung. Mit Hilfe einer hier hindurchgeführten Fixationsschraube kann die Bohr- und/oder Insertionsschablone insbesondere verdrehsicher mit der Implantatplattenvorrichtung verbunden werden. Die als okklusale Stützen ausgebildeten Ausrichtungselemente werden insbesondere über eine Gerüststruktur mit dem zentralen Fixierelement verbunden. Dadurch kann insbesondere eine vorteilhaft sichere und positionsgenaue Anbringung des Implantatsystems an einem Kiefer erreicht werden. Es kann insbesondere vor einem Vorbohren und einem Einschrauben der Kieferschrauben die Implantatplattenvorrichtung definiert an dem Kiefer positioniert werden. Ferner kann insbesondere eine vorteilhaft stabile und genaue Abstützung der Bohr- und/oder Insertionsschablone an einem Kiefer erreicht werden.

Es wird ferner vorgeschlagen, dass die Bohr- und/oder Insertionsschablone zumindest einen fest mit dem Fixierelement verbundenen Führungszylinder zu einer Führung eines Vorbohrers und/oder eines Insertionsinstruments für die Kieferschraube aufweist. Der Führungszylinder ist insbesondere von einem Hohlzylinder gebildet. Vorzugsweise ist der Führungszylinder insbesondere von einer Führungshülse zu einer winkelgetreuen Führung eines Vorbohrers und/oder eines Insertionsinstruments für die Kieferschraube gebildet. Hierdurch kann insbesondere ein winkelgetreues Verschrauben der zumindest einen Kieferschraube insbesondere relativ zu dem zumindest einen Innengewinde der Implantatplattenvorrichtung erreicht werden. Unter einem "Führungszylinder" soll in diesem Zusammenhang insbesondere ein hohlzylindrisches Element verstanden werden, welches zu einer axialen Führung eines Vorbohrers und/oder eines Insertionsinstruments und/oder einer Kieferschraube vorgesehen ist. Vorzugsweise ist der Führungszylinder dazu vorgesehen, eine Rotationsachse eines Vorbohrers und/oder eines Insertionsinstruments und/oder einer Kieferschraube relativ zu der Implantatplattenvorrichtung auszurichten. Insbesondere ist der Führungszylinder dazu vorgesehen, eine Rotationsachse eines Vorbohrers und/oder eines Insertionsinstruments und/oder einer Kieferschraube senkrecht zu einer Haupterstreckungsebene der Implantatplattenvorrichtung auszurichten. Durch den zumindest einen Führungszylinder kann insbesondere eine vorteilhaft genaue, insbesondere winkelgetreue Verschraubung der zumindest einen Kieferschraube erreicht werden.

Es wird weiter vorgeschlagen, dass das zumindest ein Ausrichtungselement einstückig mit dem Fixierelement verbunden ist. Dadurch kann insbesondere eine vorteilhafte genaue und stabile Bohr- und/oder Insertionsschablone erreicht werden. Es kann ferner eine Anzahl von Bauteilen gering gehalten werden. Vorzugsweise ist die gesamte Bohr- und/oder Insertionsschablone einteilig ausgebildet. Bevorzugt ist die Bohr- und/oder Insertionsschablone zumindest teilweise, insbesondere vollständig, in einem additiven Herstellungsverfahren, insbesondere in einem 3D-Druckverfahren, hergestellt. Dabei wäre insbesondere denkbar, dass lediglich die Ausrichtungselemente individuell, an einen Patienten angepasst, hergestellt werden und mit einem standardisierten Fixierelement verbunden werden. Es wäre jedoch auch denkbar, dass die gesamte Bohr- und/oder Insertionsschablone individuell hergestellt ist. Unter "einstückig" soll insbesondere zumindest stoffschlüssig verbunden verstanden werden, beispielsweise durch einen 3D-Druckprozess, einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Ferner geht die Erfindung aus von einem nicht beanspruchten Verfahren zur Herstellung der Bohr- und/oder Insertionsschablone. Es wird vorgeschlagen, dass die Bohr- und/oder Insertionsschablone individuell an eine Kiefer- und/oder Zahnform angepasst in einem additiven Herstellungsverfahren, insbesondere in einem 3D-Druckverfahren, hergestellt wird. Die Bohr- und/oder Insertionsschablone ist insbesondere additiv aus Kunststoff hergestellt. Dadurch kann insbesondere eine individuell an eine Kieferform angepasste Bohr- und/oder Insertionsschablone bereitgestellt werden. Es kann insbesondere eine optimale, individuelle Positionierung der Bohr- und/oder Insertionsschablone in einem Kiefer erreicht werden. Bei dem 3D-Druckverfahren wird insbesondere die Bohr- und/oder Insertionsschablone dreidimensional aufgebaut, wobei ein Aufbau insbesondere schichtweise erfolgt. Ein Aufbau der Bohr- und/oder Insertionsschablone erfolgt dabei insbesondere additiv. Insbesondere wird die Bohr- und/oder Insertionsschablone mittels einer computergesteuerten Vorrichtung, insbesondere gemäß einer CAD-Vorlage, hergestellt. Die Bohr- und/oder Insertionsschablone wird dabei insbesondere durch Aufschmelzen eines Werkstoffs, insbesondere eines Kunststoffs, aufgebaut. Vorzugsweise wird die Bohr- und/oder Insertionsschablone abhängig von Scandaten des Kiefers individuell hergestellt.

Des Weiteren geht die Erfindung aus von einem Regulierungssystem zu einer Regulierung von Zahn- und/oder Kieferstellungen mit dem zumindest einen Implantatsystem und mit zumindest einem an der Implantatplattenvorrichtung befestigten kieferorthopädischen Behandlungsapparat. Es wird vorgeschlagen, dass der kieferorthopädische Behandlungsapparat zumindest ein Bogenelement aufweist, welches einstückig mit dem Plattengrundkörper der Implantatplattenvorrichtung verbunden ist. Dadurch kann insbesondere ein modularer kieferorthopädischer Behandlungsapparat bereitgestellt werden. Es können insbesondere verschiedene Elemente mit dem Bogenelement gekoppelt werden. Hierdurch kann insbesondere eine individuelle Behandlung erreicht werden. Unter einem "Bogenelement" soll in diesem Zusammenhang insbesondere ein Führungselement verstanden werden, welches dazu vorgesehen ist, sich in einem eingesetzten Zustand entlang eines Zahnbogens, insbesondere auf einer Innen- oder Außenseite des Zahnbogens zu erstrecken. Vorzugsweise ist das Bogenelement dazu vorgesehen, sich in einem eingesetzten Zustand zumindest über einen Großteil des Zahnbogens entlang des Zahnbogens zu erstrecken. Besonders bevorzugt ist das Bogenelement von einem Metallbogen gebildet. Grundsätzlich wäre jedoch auch ein anderes, einem Fachmann als sinnvoll erscheinendes Material denkbar. Es wäre denkbar, dass das Bogenelement als ein Palatinalbogen und/oder Expansionsbogen ausgebildet ist, welche/r an den Funktionsenden mit Befestigungseinheiten zur reversiblen Befestigung an Zähnen versehen sein kann/können.

Es wird ferner vorgeschlagen, dass das zumindest eine Bogenelement an den Plattengrundkörper der Implantatplattenvorrichtung angeschweißt oder einstückig verbunden ist. Hierdurch kann insbesondere ein vorteilhaftes Regulierungssystem bereitgestellt werden, es kann insbesondere ein vorteilhaft variables und kompaktes Regulierungssystem bereitgestellt werden. Vorzugsweise ist das zumindest eine Bogenelement über einen Verbindungssteg mit dem Plattengrundkörper verbunden, wobei der Verbindungssteg an den Plattengrundkörper und/oder das Bogenelement angeschweißt ist. Vorzugsweise stellt das Bogenelement mit dem Verbindungssteg ein standardisiertes Bauteil dar, welches optional mit dem Plattengrundkörper verbindbar ist. Grundsätzlich kann das Bogenelement auch über die Funktionsausnehmung lösbar mit der Implantatplattenvorrichtung verbunden werden.

Es wird weiter vorgeschlagen, dass der kieferorthopädische Behandlungsapparat zumindest ein Bogenelement aufweist, welches in zumindest einem Behandlungsbereich einen nicht runden, beispielsweise elliptischen oder ovalen Querschnitt aufweist. Bevorzugt weist das Bogenelement entlang seiner Haupterstreckung einen gleichbleibenden Querschnitt auf. Vorzugsweise ist das Bogenelement von einem Draht mit einem nicht runden, beispielsweise elliptischen oder ovalen Querschnitt gebildet. Das Bogenelement ist insbesondere zu einer Kopplung mit einem Versalock-Verbindungselement vorgesehen. Das Bogenelement ist insbesondere zu einer rotations- und drehmomentsicheren Kopplung mit einer Befestigungseinheit vorgesehen. Dadurch kann insbesondere eine drehsichere Befestigung von Befestigungseinheiten des kieferorthopädischen Behandlungsapparats an dem Bogenelement erreicht werden. Ferner kann dadurch ein vorteilhaft stabiles Bogenelement bereitgestellt werden. Durch die konstruktive Vorgabe eines abweichenden Innendurchmessers der Befestigungseinheit und des Außendurchmessers des unrund ausgebildeten Bogenelementes kann ein definiertes Spiel um die Längsachse des Bogenelementes eingestellt werden.

Ferner wird vorgeschlagen, dass der kieferorthopädische Behandlungsapparat zumindest eine Befestigungseinheit zu einer Befestigung an einem Zahn aufweist, mit zumindest einem ersten Befestigungselement zu einer direkten Fixierung an einem Zahn und mit zumindest einem zweiten mit dem ersten Befestigungselement verbundenen Befestigungselement zu einer rotationsfesten oder definiert spielbehafteten Verbindung mit dem Bogenelement. Der vertikale oder horizontale Anteil des Zapfens befindet sich insbesondere auf der oralen oder bukkalen Seite des Zahns und dient als Aufnahme für ein passendes zweites Befestigungselement, an dem das Bogenelement, eine Apparatur, Teile einer Apparatur oder andere Elemente befestigt werden können. Das zweite Befestigungselement weist insbesondere eine Fixierhülse, vorzugsweise ein sogenanntes Tube, auf. Das zweite Befestigungselement weist insbesondere eine Fixierhülse mit einem zum Zapfen passenden Innenquerschnitt auf. Zur temporären Befestigung am Zapfen weist das zweite Befestigungselement insbesondere ferner eine Madenschraube auf. Dadurch kann insbesondere eine vorteilhaft variable und winkelstabile oder definiert spielbehafteten Befestigung von Befestigungseinheiten an dem Bogenelement erreicht werden. Das erste Befestigungselement ist insbesondere von einem Bracket und/oder einem orthodontischen Band gebildet. Vorzugsweise weist die Befestigungseinheit zudem einen Zapfen auf. Der Zapfen ist insbesondere dazu vorgesehen, über das erste Befestigungselement, wie z. B. ein orthodontisches Band oder ein anderweitig befestigtes Element an dem Zahn befestigt zu werden. Der Zapfen besitzt insbesondere einen runden, quadratischen, rechteckigen oder anderen Querschnitt. Vorzugsweise besitzt der Zapfen eine I-, L- oder T-Form. Alternativ kann der Zapfen mittels einer Klebebasis adhäsiv am Zahn befestigt werden. Vorzugsweise ist der Zapfen jedoch an einem orthodontischen Band oder angeschweißt. Auch eine einstückige Herstellung in Form eines gegossenen oder additiv hergestellten Bandes oder Ringes ist vorgesehen. Der vertikale und horizontale Anteil des Zapfens befindet sich insbesondere auf der oralen oder bukkalen Seite des Zahns und dient als Aufnahme für ein passendes zweites Befestigungselement, an dem das Bogenelement, eine Apparatur, Teile einer Apparatur oder andere Elemente befestigt werden können. Das zweite Befestigungselement weist insbesondere eine Fixierhülse, vorzugsweise ein sogenanntes Tube, auf. Das zweite Befestigungselement weist insbesondere eine Fixierhülse mit einem zum Zapfen passenden Innenquerschnitt auf. Zur temporären Befestigung am Zapfen weist das zweite Befestigungselement insbesondere ferner eine Madenschraube auf. Besonders bevorzugt ist das zweite Befestigungselement als ein Triple Tube ausgebildet. Beim Versalock-Triple Tube handelt es sich insbesondere um ein Befestigungselement mit drei Fixierhülsen. Die Querschnittsform der oberen, koronalen Fixierhülse entspricht insbesondere der Querschnittsform des Zapfens. Die beiden unteren Fixierhülsen können eine andere Querschnittsform aufweisen und dienen zur Aufnahme des Bogenelements, wahlweise mit definiertem Spiel. Optional kann das Triple Tube Madenschrauben aufweisen, mit deren Hilfe der Zapfen und/oder das Bogenelement fixiert werden können.

Des Weiteren wird vorgeschlagen, dass das zweite Befestigungselement zumindest eine Fixierhülse aufweist, welche dazu vorgesehen ist, das Bogenelement zu umgreifen und welche einen zumindest unrunden, insbesondere annähernd rechteckigen, Aufnahmebereich für das Bogenelement aufweist. Dadurch kann insbesondere eine vorteilhaft variable, winkelstabile oder mit einem definierten Spiel versehene Befestigung von Befestigungseinheiten an dem Bogenelement erreicht werden. Insbesondere kann die Befestigungseinheit dadurch vorteilhaft lösbar an der Bogeneinheit befestigt werden. Es kann insbesondere eine rotationsfeste, axial veränderliche Fixierung erreicht werden.

Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination.

Es zeigen:
- Fig. 1: ein Regulierungssystem mit einem Implantatsystem, das eine erfindungsgemäße Implantatplattenvorrichtung aufweist, und mit einem an der Implantatplattenvorrichtung befestigten kieferorthopädischen Behandlungsapparat und eine Bohr- und/oder Insertionsschablone zu einem Anbringen des Implantatsystems in einer schematischen Ansicht von oben,

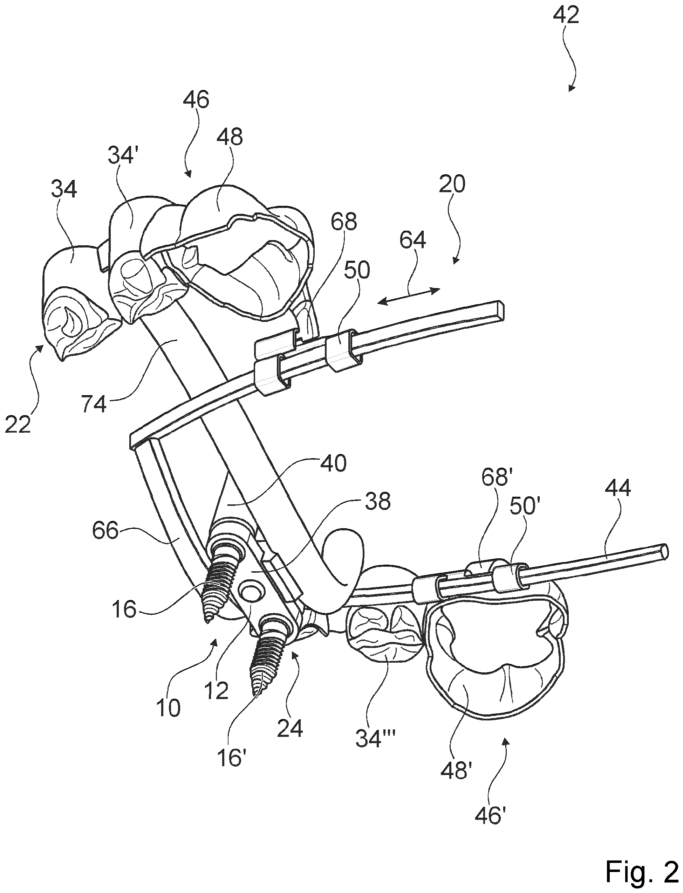

- Fig. 2: das Regulierungssystem mit dem Implantatsystem und mit dem an der Implantatplattenvorrichtung befestigten kieferorthopädischen Behandlungsapparat und die Bohr- und/oder Insertionsschablone zu einem Anbringen des Implantatsystems in einer schematischen Ansicht von unten,
- Fig. 3: das Regulierungssystem mit dem Implantatsystem und mit dem an der Implantatplattenvorrichtung befestigten kieferorthopädischen Behandlungsapparat und die Bohr- und/oder Insertionsschablone zu einem Anbringen des Implantatsystems in einem in einem Kiefer eingesetzten Zustand in einer schematischen Darstellung,
- Fig. 4: das Regulierungssystem mit dem Implantatsystem und mit dem an der Implantatplattenvorrichtung befestigten kieferorthopädischen Behandlungsapparat in einem in einem Kiefer eingesetzten Zustand in einer schematischen Darstellung,
- Fig. 5: das Implantatsystem mit der Implantatplattenvorrichtung und mit zwei Kieferschrauben und einer Befestigungsschraube in einer schematischen Darstellung,
- Fig. 6: die Kieferschraube des Implantatsystems in einer schematischen Seitenansicht,
- Fig. 7: die Kieferschraube des Implantatsystems in einer schematischen Schnittdarstellung entlang der Schnittlinie VII-VII,
- Fig. 8: eine Befestigungseinheit des kieferorthopädischen Behandlungsapparats in einer schematischen Darstellung und
- Fig. 9: ein schematisches Ablaufdiagramm eines Verfahrens zur Herstellung der Bohr- und/oder Insertionsschablone.

### Beschreibung des Ausführungsbeispiels

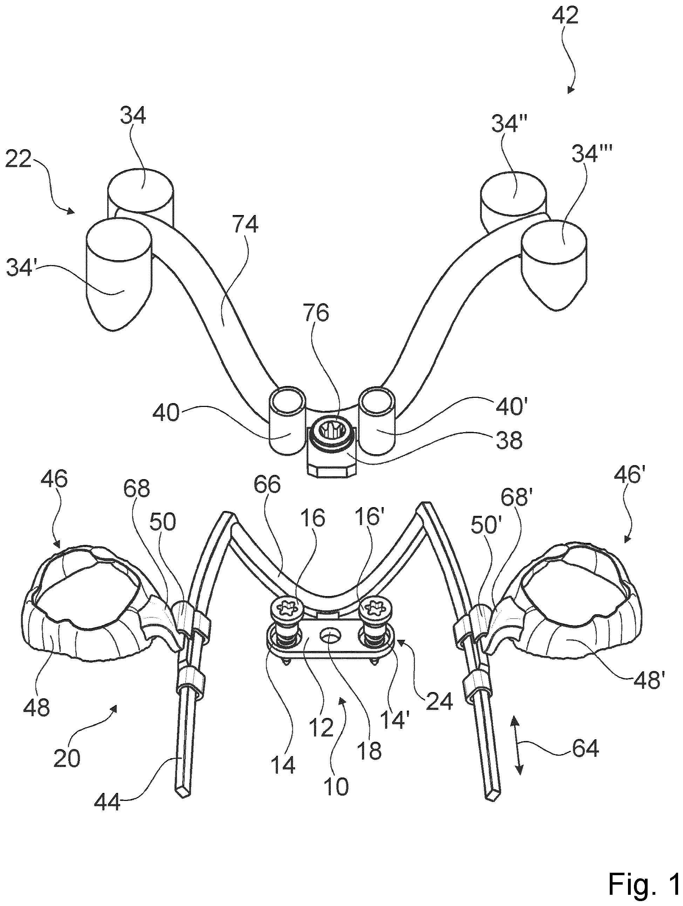

Figur 1 zeigt ein Regulierungssystem 42 mit einem Implantatsystem 24 und mit einem kieferorthopädischen Behandlungsapparat 20. Das Implantatsystem 24 weist eine Implantatplattenvorrichtung 10 auf. Die Implantatplattenvorrichtung 10 ist von einem im Wesentlichen quaderförmigen Bauteil gebildet. Die Implantatplattenvorrichtung 10 ist eben ausgebildet. Grundsätzlich wäre jedoch auch eine andere, einem Fachmann als sinnvoll erscheinende Form der Implantatplattenvorrichtung 10 denkbar. Beispielsweise wäre denkbar, dass die Implantatplattenvorrichtung 10 konkav gekrümmt ist, um sich einer Form eines Gaumens anzupassen. Die Implantatplattenvorrichtung 10 weist einen Plattengrundkörper 12 auf. Der Plattengrundkörper 12 ist von einer annähernd rechteckigen Platte, insbesondere einer Stahlplatte, besonders bevorzugt einer Chirurgenstahlplatte, gebildet. Der Plattengrundkörper 12 weist abgerundete Ecken auf. Eine maximale Erstreckung des Plattengrundkörpers 12 beträgt maximal 20 mm, vorzugsweise maximal 17 mm und bevorzugt maximal 14 mm. Eine maximale Erstreckung des Plattengrundkörpers 12 beträgt zumindest annähernd 12 mm. Eine Dicke des Plattengrundkörpers 12 beträgt zumindest annähernd 1,2 mm. Eine Breite des Plattengrundkörpers 12 beträgt zumindest annähernd 4 mm.

Ferner weist die Implantatplattenvorrichtung 10 zumindest eine in den Plattengrundkörper 12 eingebrachte Fixierausnehmung 14, 14' auf. Die Implantatplattenvorrichtung 10 weist zwei in den Plattengrundkörper 12 eingebrachte Fixierausnehmungen 14, 14' auf. Die Implantatplattenvorrichtung 10 weist eine Fixierausnehmung 14 und eine weitere Fixierausnehmung 14' auf. Die Fixierausnehmungen 14, 14' sind jeweils von zylindrischen Bohrungen gebildet, welche sich senkrecht zu einer Haupterstreckungsebene des Plattengrundkörpers 12 durch den Plattengrundkörper 12 erstrecken. Die Fixierausnehmungen 14, 14' weisen jeweils eine Erstreckungsachse 56, 56' auf, welche sich senkrecht zu einer Haupterstreckungsebene des Plattengrundkörpers 12 erstrecken. Die Fixierausnehmungen 14, 14' sind jeweils zu einer Aufnahme einer Kieferschraube 16, 16' vorgesehen. Die Fixierausnehmungen 14, 14'sind zu einer Aufnahme der Kieferschrauben 16, 16' des Implantatsystems 24 vorgesehen. Die Implantatplattenvorrichtung 10 weist ferner zumindest ein an zumindest eine der Fixierausnehmungen 14, 14' angrenzendes Innengewinde auf. Die Implantatplattenvorrichtung 10 weist ein an die Fixierausnehmung 14 angrenzendes Innengewinde auf. Ferner weist die Implantatplattenvorrichtung 10 ein an die weitere Fixierausnehmung 14' angrenzendes Innengewinde auf. Die die Fixierausnehmungen 14, 14' begrenzenden Mantelflächen des Plattengrundkörpers 12 sind jeweils mit einem Innengewinde versehen.

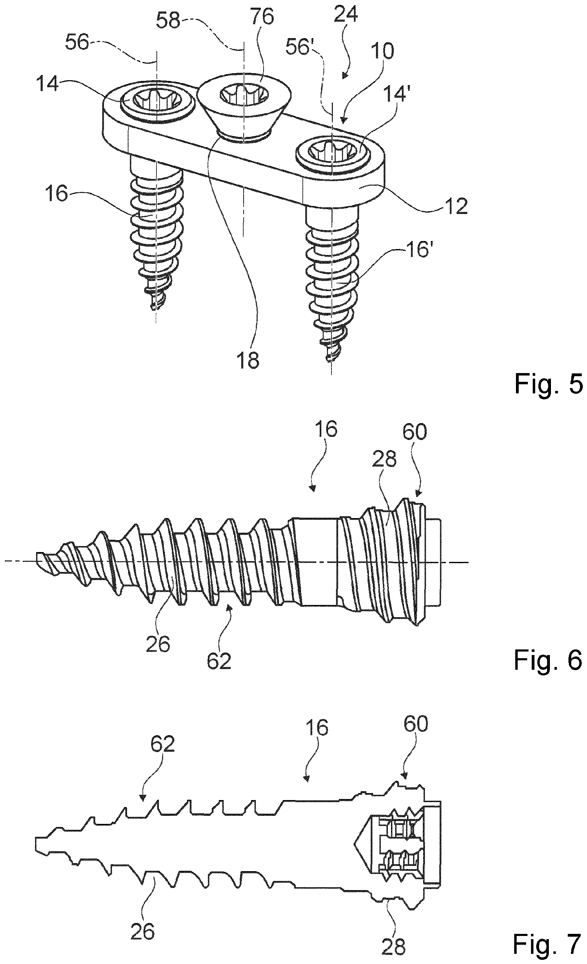

Des Weiteren weist die Implantatplattenvorrichtung 10 eine in den Plattengrundkörper 12 eingebrachte Funktionsausnehmung 18 auf. Die Funktionsausnehmung 18 ist von einer zylindrischen Bohrung gebildet, welche sich senkrecht zu einer Haupterstreckungsebene des Plattengrundkörpers 12 durch den Plattengrundkörper 12 erstreckt. Die Funktionsausnehmung 18 weist eine Erstreckungsachse 58 auf, welche sich senkrecht zu einer Haupterstreckungsebene des Plattengrundkörpers 12 erstreckt. Die Funktionsausnehmung 18 ist zu einer Kopplung mit dem kieferorthopädischen Behandlungsapparat 20 und/oder einer Bohr- und/oder Insertionsschablone 22 vorgesehen. Die Funktionsausnehmung 18 kann sowohl mit dem kieferorthopädischen Behandlungsapparat 20 als auch mit der Bohr- und/oder Insertionsschablone 22 gekoppelt werden. Zudem weist die Implantatplattenvorrichtung 10 ein an die Funktionsausnehmung 18 angrenzendes Innengewinde auf, welches zu einer winkelstabilen Kopplung mit dem kieferorthopädischen Behandlungsapparat 20 und/oder der Bohr- und/oder Insertionsschablone 22 vorgesehen ist. Die die Funktionsausnehmung 18 begrenzende Mantelfläche des Plattengrundkörpers 12 ist mit einem Innengewinde versehen (Fig. 1, 5).

Die weitere Fixierausnehmung 14' ist auf einer der Fixierausnehmung 14 gegenüberliegenden Seite der Funktionsausnehmung 18 angeordnet. Die Fixierausnehmung 14, die weitere Fixierausnehmung 14' und die Funktionsausnehmung 18 sind entlang der Haupterstreckungsrichtung des Plattengrundkörpers 12 in einer Reihe angeordnet, wobei die Funktionsausnehmung 18 zwischen den Fixierausnehmungen 14, 14' angeordnet ist. Die Erstreckungsachsen 56, 56', 58 der Fixierausnehmung 14, der weiteren Fixierausnehmung 14' und der Funktionsausnehmung 18 erstrecken sich jeweils senkrecht zu einer Haupterstreckungsebene der Implantatplattenvorrichtung 10. Die Erstreckungsachsen 56, 56', 58 der Fixierausnehmung 14, der weiteren Fixierausnehmung 14' und der Funktionsausnehmung 18 sind in einer gemeinsamen Ebene angeordnet (Figur 5).

Das Implantatsystem 24 weist die Implantatplattenvorrichtung 10 und zumindest eine Kieferschraube 16, 16' auf. Das Implantatsystem 24 weist zwei Kieferschrauben 16, 16' auf. Die Kieferschrauben 16, 16' sind zu einer Fixierung der Implantatplattenvorrichtung 10 an einem Kieferknochen dazu vorgesehen, durch die Fixierausnehmungen 14, 14' in einen Kieferknochen eingeschraubt zu werden. Die Kieferschraube 16 ist dazu vorgesehen, durch die Fixierausnehmung 14 geschraubt zu werden. Die Kieferschraube 16' ist dazu vorgesehen, durch die weitere Fixierausnehmung 14' geschraubt zu werden. Die Kieferschrauben 16, 16' sind identisch ausgebildet. Im Folgenden wird beispielhaft lediglich eine Kieferschraube 16 der Kieferschrauben 16, 16' beschrieben, wobei eine Beschreibung der Kieferschraube 16 auch auf die Kieferschraube 16' angewendet werden kann.

Die Kieferschraube 16 weist einen Schraubenkopf 60 und einen Gewindeschaft 62 auf. Der Schraubenkopf 60 ist beispielhaft von einem Torx-Schraubenkopf gebildet. Die Kieferschraube 16 weist ferner ein erstes Gewinde 26 zu einem Einschrauben in einen Knochen und ein zweites Gewinde 28 zu einem Einschrauben in das an die Fixierausnehmung 14 angrenzende Innengewinde der Implantatplattenvorrichtung 10 auf. Die Gewindesteigung des ersten Gewindes 26 ist von einer Gewindesteigung des zweiten Gewindes 28 verschieden. Die Kieferschraube 16 weist an ihrem Schraubenkopf 60 das zweite Gewinde 28 auf, welches jeweils vorgesehen ist, in das der Fixierausnehmung 14 zugeordnete Innengewinde der Implantatplattenvorrichtung 10 eingeschraubt zu werden. Das erste Gewinde 26 bildet ein Hauptgewinde und ist an dem Gewindeschaft 62 angeordnet. Das erste Gewinde 26 ist über einen zylindrischen Abschnitt der Kieferschraube 16 von dem zweiten Gewinde 28 getrennt. Bevorzugt führen die unterschiedlichen Gewindesteigungen zur Anhebung oder Anpressung an die Schleimhaut. Die Gewindesteigung des zweiten Gewindes 28 der Kieferschraube 16 ist größer ist als die Gewindesteigung des ersten Gewindes 26 der Kieferschraube 16. Das zweite Gewinde 28 des Schraubenkopfes 60 der Kieferschraube 16 weist eine höhere Gewindesteigung auf, als das erste Gewinde 26 des Gewindeschafts 62 der Kieferschraube 16. Hierdurch kann durch das Eindrehen des zweiten Gewindes 28 der Kieferschraube 16 in die Implantatplattenvorrichtung 10 eine nachträgliche Anhebung der Implantatplattenvorrichtung 10 und damit ein Anheben von der Schleimhaut des Patienten erreicht werden (Figur 6, 7).

Das Regulierungssystem 42 ist zu einer Regulierung von Zahn- und/oder Kieferstellungen vorgesehen. Das Regulierungssystem 42 weist das Implantatsystem 24 und einen an der Implantatplattenvorrichtung 10 befestigten kieferorthopädischen Behandlungsapparat 20 auf. Der kieferorthopädische Behandlungsapparat 20 kann verschiedene, einem Fachmann als sinnvoll erscheinende Ausgestaltungen haben. Es wäre auch denkbar, dass der kieferorthopädische Behandlungsapparat 20 während einer Behandlung verändert und/oder getauscht wird. Der dargestellte kieferorthopädische Behandlungsapparat 20 ist daher insbesondere beispielhaft.

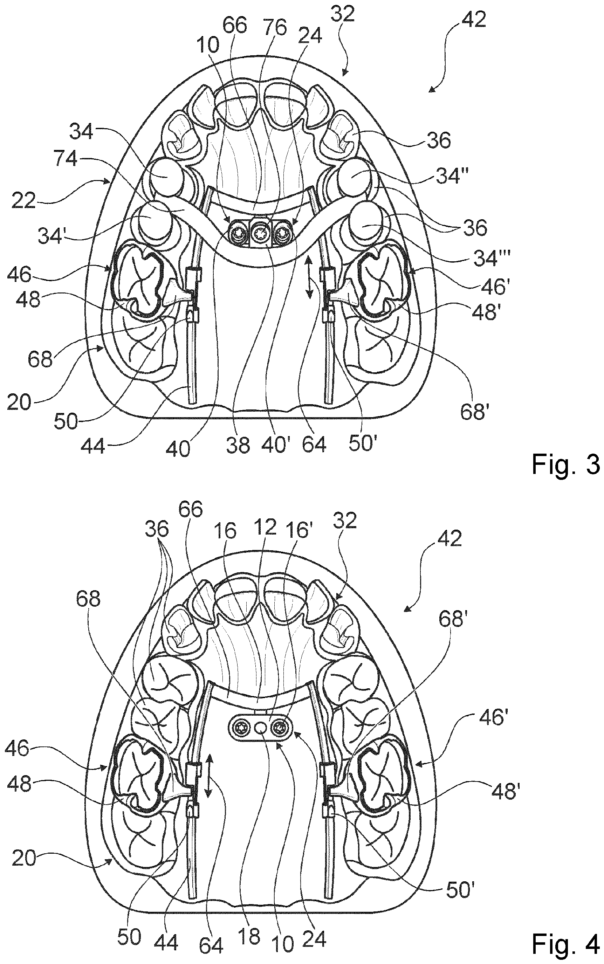

Der kieferorthopädische Behandlungsapparat 20 weist ein Bogenelement 44 auf, welches einstückig mit dem Plattengrundkörper 12 der Implantatplattenvorrichtung 10 verbunden ist. Das Bogenelement 44 ist dazu vorgesehen, sich in einem eingesetzten Zustand über einen Großteil des Zahnbogens des Patienten entlang des Zahnbogens zu erstrecken. Das Bogenelement 44 ist von einem Metallbogen gebildet. Es wäre denkbar, dass das Bogenelement 44 als ein Palatinalbogen und/oder Expansionsbogen ausgebildet ist, welche/r an den Funktionsenden mit Befestigungseinheiten zur reversiblen Befestigung an Zähnen 36 versehen sein kann/können. Das Bogenelement 44 weist ferner in einem Behandlungsbereich, also in einem Bereich, welcher sich entlang des Zahnbogens erstreckt, einen zumindest annähernd rechteckigen Querschnitt auf. Das Bogenelement 44 weist in einer Ebene senkrecht zu einer Haupterstreckung 64, welche sich parallel zu dem Zahnbogen erstreckt, einen rechteckigen Querschnitt auf. Das Bogenelement 44 weist eine gekrümmte Haupterstreckung 64 auf. Das Bogenelement 44 weist entlang seiner Haupterstreckung 64 einen gleichbleibenden Querschnitt auf. Das Bogenelement 44 ist von einem Draht mit einem nichtrunden, z.B. rechteckigen, ovalen oder elliptischen Querschnitt gebildet. Das Bogenelement 44 ist zu einer rotations- und drehmomentsicheren oder mit einem definierten Spiel versehenen Kopplung mit einer Befestigungseinheit 46, 46' vorgesehen. Das Bogenelement 44 ist an den Plattengrundkörper 12 der Implantatplattenvorrichtung 10 angeschweißt. Auch eine einstückige Ausbildung ist möglich. Der kieferorthopädische Behandlungsapparat 20 weist einen Verbindungssteg 66 auf, über welchen das Bogenelement 44 mit dem Plattengrundkörper 12 verbunden ist. Der Verbindungssteg 66 ist T-förmig ausgebildet. Der Verbindungssteg 66 ist an den Plattengrundkörper 12 und das Bogenelement 44 angeschweißt. Grundsätzlich wäre auch denkbar, dass das Bogenelement 44 über die Funktionsausnehmung 18 lösbar mit der Implantatplattenvorrichtung 10 verbunden ist (Fig. 3).

Der kieferorthopädische Behandlungsapparat 20 weist ferner zumindest eine Befestigungseinheit 46, 46' zu einer Befestigung an einem Zahn 36 auf. Der kieferorthopädische Behandlungsapparat 20 weist zwei Befestigungseinheiten 46, 46' zu einer Befestigung an jeweils einem Zahn 36 auf. Die Befestigungseinheiten 46, 46' weisen jeweils ein erstes Befestigungselement 48, 48' zu einer direkten Fixierung an einem Zahn 36 auf. Die ersten Befestigungselemente 48, 48' sind jeweils von einem orthodontischen Band gebildet. Ferner weisen die Befestigungseinheiten 46, 46' jeweils einen Zapfen 68, 68' auf. Die Zapfen 68, 68' sind jeweils dazu vorgesehen, über das erste Befestigungselement 48, 48' an dem jeweiligen Zahn 36 befestigt zu werden. Die Zapfen 68, 68' besitzen jeweils eine I-, L- oder T-Form. Die Zapfen 68, 68' sind jeweils an eines der ersten Befestigungselemente 48, 48' angeschweißt. Alternativ können die Zapfen 68, 68' auch mittels einer Klebebasis adhäsiv direkt am Zahn 36 befestigt werden. Auch eine einstückige Herstellung in Form eines gegossenen oder additiv hergestellten Bandes ist denkbar. Die Zapfen 68, 68' befinden sich jeweils auf der oralen oder bukkalen Seite des Zahns 36 und dienen zudem als Aufnahme für ein passendes zweites Befestigungselement 50, 50', an dem das Bogenelement 44 befestigt werden kann.

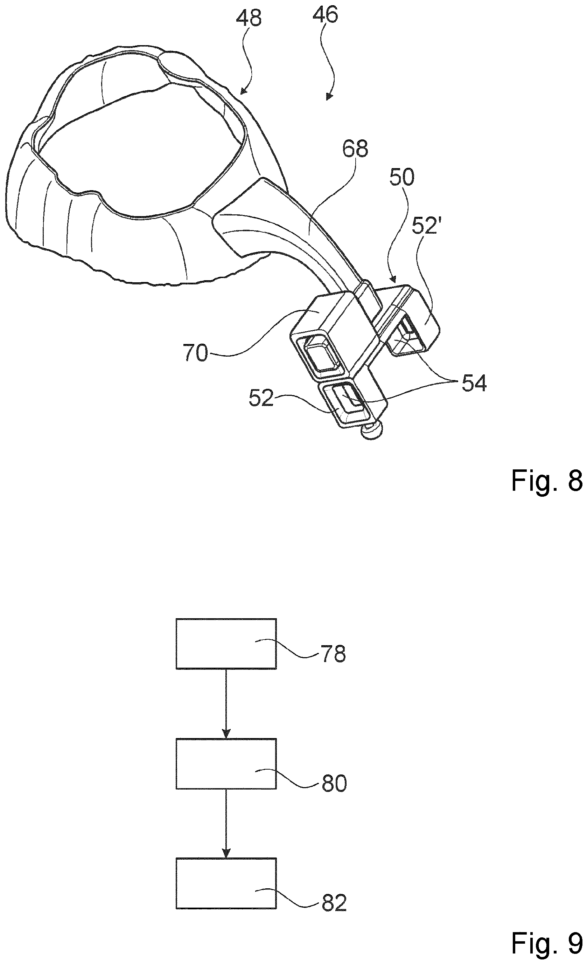

Die Befestigungseinheiten 46, 46' weisen jeweils ein zweites mit dem ersten Befestigungselement 48, 48' verbundenes Befestigungselement 50, 50' zu einer rotationsfesten Verbindung mit dem Bogenelement 44 auf. Die zweiten Befestigungselemente 50, 50' sind jeweils über die Zapfen 68, 68' der jeweiligen Befestigungseinheit 46, 46' mit den ersten Befestigungselementen 48, 48' der jeweiligen Befestigungseinheit 46, 46' verbunden. Die zweiten Befestigungselemente 50, 50' weisen jeweils zumindest eine Fixierhülse 52, 52`, 70 auf. Die zweiten Befestigungselemente 50, 50' weisen jeweils eine Fixierhülse 70 mit einem zu den Zapfen 68, 68' passenden Innenquerschnitt auf. Zur temporären Befestigung am Zapfen 68, 68' der jeweiligen Befestigungseinheit 46, 46' weisen die zweiten Befestigungselemente 50, 50' ferner jeweils eine Madenschraube auf. Die zweiten Befestigungselemente 50, 50' weisen ferner jeweils zwei weitere Fixierhülsen 52, 52' auf. Die Fixierhülsen 52, 52' der zweiten Befestigungselemente 50, 50' sind jeweils dazu vorgesehen, das Bogenelement 44 zu umgreifen. Die Fixierhülsen 52, 52' der zweiten Befestigungselemente 50, 50' weisen jeweils einen zumindest annähernd rechteckigen Aufnahmebereich 54 für das Bogenelement 44 auf. Die Fixierhülsen 52, 52' der zweiten Befestigungselemente 50, 50' weisen einen zu dem Bogenelement 44 passenden Innenquerschnitt auf. Die zweiten Befestigungselemente 50, 50' sind jeweils als ein Triple Tube ausgebildet. Zur temporären Befestigung an dem Bogenelement 44 weisen die zweiten Befestigungselemente 50, 50' ferner jeweils eine Madenschraube auf (Figur 8).

Ferner zeigt die Figur 1 eine Bohr- und/oder Insertionsschablone 22 zu einem Anbringen des Implantatsystems 24 an einem Kiefer 32. Die Bohr- und/oder Insertionsschablone 22 weist zumindest ein Ausrichtungselement 34, 34', 34", 34'" auf. Die Bohr- und/oder Insertionsschablone 22 weist vier Ausrichtungselemente 34, 34', 34", 34"' auf, wobei jeweils zwei Ausrichtungselemente 34, 34', 34", 34'" direkt nebeneinander angeordnet sind. Die Ausrichtungselemente 34, 34', 34", 34‴ sind jeweils zu einem Abstützen auf jeweils einem Zahn 36 des Kiefers 32 vorgesehen. Zwei der Ausrichtungselemente 34, 34', 34", 34"' sind dazu vorgesehen sich auf linken Molaren abzustützen, während zwei der Ausrichtungselemente 34, 34', 34", 34'" dazu vorgesehen sind, sich auf rechten Molaren abzustützen. Die Ausrichtungselemente 34, 34', 34", 34'" sind jeweils zumindest zylindrisch ausgebildet, wobei eine Grundseite eine an eine Zahnoberfläche angepasste, individuelle Form aufweist. Ferner weist die Bohr- und/oder Insertionsschablone 22 ein Verbindungselement 74 auf. Das Verbindungselement 74 ist dazu vorgesehen, die Ausrichtungselemente 34, 34', 34", 34"' zu verbinden. Das Verbindungselement 74 erstreckt sich von einer linken Zahnreihe zu einer rechten Zahnreihe. Das Verbindungselement 74 weist einen runden Querschnitt auf. Ferner weist das Verbindungselement 74 einen gekrümmten, an eine Gaumenform angepassten Verlauf auf. Des Weiteren weist die Bohr- und/oder Insertionsschablone 22 ein mit den Ausrichtungselementen 34, 34', 34", 34'" fest verbundenes Fixierelement 38 auf, welches dazu vorgesehen ist, über die Funktionsausnehmung 18 mit der Implantatplattenvorrichtung 10 verbunden zu werden. Das Fixierelement 38 ist an dem Verbindungselement 74 angeordnet. Das Fixierelement 38 ist zwischen den linken Ausrichtungselementen 34, 34' und den rechten Ausrichtungselementen 34", 34'" an dem Verbindungselement 74 angeordnet. Das Fixierelement 38 ist plattenförmig ausgebildet und weist eine zentrale Bohrung auf. Das Fixierelement 38 ist zu einer Herstellung einer lösbaren Verbindung mit der Implantatplattenvorrichtung 10 vorgesehen. Das Fixierelement 38 ist dazu vorgesehen, über eine Schraube 76 mit der Implantatplattenvorrichtung 10 verbunden zu werden. Zu einer Verbindung wird die Schraube 76 durch die Bohrung in dem Fixierelement 38 in die Funktionsausnehmung 18 der Implantatplattenvorrichtung 10 eingeschraubt.

Des Weiteren weist die Bohr- und/oder Insertionsschablone 22 zumindest einen fest mit dem Fixierelement 38 verbundenen Führungszylinder 40, 40' auf. Die Bohr- und/oder Insertionsschablone 22 weist zwei fest mit dem Fixierelement 38 verbundene Führungszylinder 40, 40' auf. Die Führungszylinder 40, 40' sind zu einer Führung eines Vorbohrers und/oder eines Insertionsinstruments für die Kieferschraube 16, 16' vorgesehen. Die Führungszylinder 40, 40' sind jeweils von einem Hohlzylinder gebildet.

Die Führungszylinder 40, 40' sind jeweils von einer Führungshülse zu einer winkelgetreuen Führung eines Vorbohrers und/oder eines Insertionsinstruments für die Kieferschraube 16, 16' gebildet. Die Führungszylinder 40, 40' sind auf gegenüberliegenden Seiten des Fixierelements 38 angeordnet. Ein mittlerer Abstand der Führungszylinder 40, 40' entspricht insbesondere einem mittleren Abstand der Fixierausnehmungen 14, 14'.

Die Ausrichtungselemente 34, 34', 34", 34"' sind einstückig mit dem Fixierelement 38 verbunden. Die Ausrichtungselemente 34, 34', 34", 34'" sind über das Verbindungselement 74 einstückig mit dem Fixierelement 38 verbunden. Die Bohr- und/oder Insertionsschablone 22 ist einstückig ausgebildet. Die Bohr- und/oder Insertionsschablone 22 ist in einem 3D-Druckverfahren hergestellt.

Figur 9 zeigt ein schematisches Ablaufdiagramm eines Verfahrens zur Herstellung der Bohr- und/oder Insertionsschablone 22. Bei dem Verfahren wird in einem ersten Verfahrensschritt 78 mittels eines Scanverfahrens ein digitaler Abdruck des Kiefers 32, insbesondere eines Gebisses, des Patienten erstellt. Ferner wird in dem Verfahren die Bohr- und/oder Insertionsschablone 22 individuell an eine Kiefer- und/oder Zahnform angepasst, insbesondere anhand der Scandaten in einem additiven Herstellungsverfahren, insbesondere in einem 3D-Druckverfahren, hergestellt. Es wird in einem zweiten Verfahrensschritt 80 anhand der Scandaten des Kiefers 32 ein virtuelles 3D-Modell der Bohr- und/oder Insertionsschablone 22 konstruktiv erstellt. Anschließend wird die Bohr- und/oder Insertionsschablone 22 in einem dritten Verfahrensschritt 82 in einem 3D-Druckverfahren hergestellt. Die individuell hergestellte Bohr- und/oder Insertionsschablone 22 kann anschließend zu einem Einschrauben des Implantatsystems 24 in den Kiefer 32 genutzt werden.

### Bezugszeichen

- 10: Implantatplattenvorrichtung
- 12: Plattengrundkörper
- 14: Fixierausnehmung
- 14': Fixierausnehmung
- 16: Kieferschraube
- 16': Kieferschraube
- 18: Funktionsausnehmung
- 20: Behandlungsapparat
- 22: Bohr- und/oder Insertionsschablone
- 24: Implantatsystem
- 26: Gewinde
- 28: Gewinde
- 32: Kiefer
- 34: Ausrichtungselement
- 34': Ausrichtungselement
- 34": Ausrichtungselement
- 34'": Ausrichtungselement
- 36: Zahn
- 38: Fixierelement
- 40: Führungszylinder
- 40': Führungszylinder
- 42: Regulierungssystem
- 44: Bogenelement
- 46: Befestigungseinheit
- 46': Befestigungseinheit
- 48: Befestigungselement
- 48': Befestigungselement
- 50: Befestigungselement
- 50': Befestigungselement
- 52: Fixierhülse
- 52': Fixierhülse
- 54: Aufnahmebereich
- 56: Erstreckungsachse
- 56': Erstreckungsachse
- 58: Erstreckungsachse
- 60: Schraubenkopf
- 62: Gewindeschaft
- 64: Haupterstreckung
- 66: Verbindungssteg
- 68: Zapfen
- 68': Zapfen
- 70: Fixierhülse
- 74: Verbindungselement
- 76: Schraube
- 78: Verfahrensschritt
- 80: Verfahrensschritt
- 82: Verfahrensschritt

## Patentansprüche

1. Regulierungssystem zu einer Regulierung von Zahn- und/oder Kieferstellungen mit zumindest einem Implantatsystem (24), das eine Implantatplattenvorrichtung (10) mit einem Plattengrundkörper (12), mit zumindest einer in den Plattengrundkörper (12) eingebrachten Fixierausnehmung (14, 14'), welche zu einer Aufnahme einer Kieferschraube (16, 16') vorgesehen ist, die zu einer Fixierung des Plattengrundkörpers (12) dazu vorgesehen ist, durch die Fixierausnehmung (14, 14') in einen Knochen, insbesondere einen Kieferknochen, eingeschraubt zu werden, und mit zumindest einem an die Fixierausnehmung (14, 14') angrenzenden Innengewinde, und zumindest eine Kieferschraube (16, 16') aufweist, welche dazu vorgesehen ist, zu einer Fixierung der Implantatplattenvorrichtung (10) an einem Knochen, insbesondere einem Kieferknochen, durch die Fixierausnehmung (14, 14') in einen Knochen, insbesondere einen Kieferknochen, eingeschraubt zu werden, und mit zumindest einem an der Implantatplattenvorrichtung (10) befestigten kieferorthopädischen Behandlungsapparat (20),
**dadurch gekennzeichnet, dass**
die Implantatplattenvorrichtung (10) zumindest eine in den Plattengrundkörper (12) eingebrachte Funktionsausnehmung (18) zu einer Kopplung mit einem kieferorthopädischen Behandlungsapparat (20) und/oder einer Bohr- und/oder Insertionsschablone (22) aufweist, wobei die Implantatplattenvorrichtung (10) zumindest ein an die Funktionsausnehmung (18) angrenzendes Innengewinde aufweist, welches zu einer winkelstabilen Kopplung mit einem kieferorthopädischen Behandlungsapparat (20) und/oder einer Bohr- und/oder Insertionsschablone (22) vorgesehen ist.

2. Regulierungssystem nach Anspruch 1,
**dadurch gekennzeichnet, dass**
die Implantatplattenvorrichtung eine in den Plattengrundkörper (12) eingebrachte weitere Fixierausnehmung (14') aufweist, welche auf einer der Fixierausnehmung (14) gegenüberliegenden Seite der Funktionsausnehmung (18) angeordnet ist und welche zu einer Aufnahme einer Kieferschraube (16') vorgesehen ist, die zu einer Fixierung des Plattengrundkörpers (12) dazu vorgesehen ist, durch die Fixierausnehmung (14') in einen Knochen, insbesondere einen Kieferknochen, eingeschraubt zu werden, und zumindest ein an die weitere Fixierausnehmung (14') angrenzendes Innengewinde.

3. Regulierungssystem nach einem der vorhergehenden Ansprüche,
**dadurch gekennzeichnet, dass**
eine maximale Erstreckung des Plattengrundkörpers (12) maximal 20 mm beträgt.

4. Regulierungssystem nach Anspruch 1,
**dadurch gekennzeichnet, dass**
die zumindest eine Kieferschraube (16, 16') zumindest ein erstes Gewinde (26) zu einem Einschrauben in einen Knochen und zumindest ein zweites Gewinde (28) zu einem Einschrauben in das an die Fixierausnehmung (14, 14') angrenzende Innengewinde der Implantatplattenvorrichtung (10) aufweist, wobei eine Gewindesteigung des ersten Gewindes (26) von einer Gewindesteigung des zweiten Gewindes (28) verschieden ist.

5. Regulierungssystem nach Anspruch 4,
**dadurch gekennzeichnet, dass**
die Gewindesteigung des zweiten Gewindes (28) der Kieferschraube (16, 16') größer ist als die Gewindesteigung des ersten Gewindes (26) der Kieferschraube (16, 16').

6. Regulierungssystem nach Anspruch 1,
**dadurch gekennzeichnet, dass**
der kieferorthopädische Behandlungsapparat (20) zumindest ein Bogenelement (44) aufweist, welches einstückig mit dem Plattengrundkörper (12) der Implantatplattenvorrichtung (10) verbunden ist.

7. Regulierungssystem nach Anspruch 1,
**dadurch gekennzeichnet, dass**
das zumindest eine Bogenelement (44) an den Plattengrundkörper (12) der Implantatplattenvorrichtung (10) angeschweißt oder einstückig verbunden ist.

8. Regulierungssystem nach Anspruch 1,
**dadurch gekennzeichnet, dass**
der kieferorthopädische Behandlungsapparat (20) zumindest ein Bogenelement (44) aufweist, welches in zumindest einem Behandlungsbereich einen unrunden, zumindest annähernd rechteckigen Querschnitt aufweist.

9. Regulierungssystem nach Anspruch 1,
**dadurch gekennzeichnet, dass**
der kieferorthopädische Behandlungsapparat (20) zumindest eine Befestigungseinheit (46, 46') zu einer Befestigung an einem Zahn (36) aufweist, mit zumindest einem ersten Befestigungselement (48, 48') zu einer direkten Fixierung an einem Zahn (36) und mit zumindest einem zweiten mit dem ersten Befestigungselement (48, 48') verbundenen Befestigungselement (50, 50') zu einer rotationsfesten oder definiert spielbehafteten Verbindung mit dem Bogenelement (44).

10. Regulierungssystem nach Anspruch 9,
**dadurch gekennzeichnet, dass**
die zweiten Befestigungselemente (50, 50') jeweils eine Fixierhülse (70) mit einem zu Zapfen (68, 68') der Befestigungseinheit (46, 46') passenden Innenquerschnitt aufweisen, wobei
das zweite Befestigungselement (50, 50') zumindest zwei weitere Fixierhülsen (52, 52') aufweist, welche dazu vorgesehen sind, das Bogenelement (44) zu umgreifen und welche einen zumindest unrunden, insbesondere annähernd rechteckigen, Aufnahmebereich (54) für das Bogenelement (44) aufweisen.

## Claims

1. Regulation system for a regulation of tooth and/or jaw positions,
with at least one implant system (24)
comprising an implant plate device (10) with a plate base body (12), with at least one fixing recess (14, 14') which is introduced in the plate base body (12) and is configured to receive a jawbone screw (16, 16') that is configured, for a fixing of the plate base body (12), to be screwed through the fixing recess (14, 14') into a bone, in particular a jawbone, and with at least one inner thread adjoining the fixing recess (14, 14'),
and comprising at least one jawbone screw (16, 16') that is configured, for a fixing of the implant plate device (10) to a bone, in particular a jawbone, to be screwed through the fixing recess (14, 14') into a bone, in particular a jawbone, and with at least one orthodontic treatment apparatus (20) that is fastened to the implant plate device (10),
**characterized in that**
the implant plate device (10) has at least one functional recess (18), introduced in the plate base body (12), for a coupling with an orthodontic treatment apparatus (20) and/or with a drilling and/or insertion templet (22),
wherein the implant plate device (10) has at least one inner thread which adjoins the functional recess (18) and is configured for an angle-stable coupling with an orthodontic treatment apparatus (20) and/or with a drilling and/or insertion templet (22).

2. Regulation system according to claim 1,
**characterized in that**
the implant plate device
has a further fixing recess (14') which is introduced in the plate base body (12), which is arranged on a side of the functional recess (18) that is situated opposite the fixing recess (14) and which is configured to receive a jawbone screw (16') that is configured, for a fixing of the plate base body (12), to be screwed through the fixing recess (14') into a bone, in particular a jawbone,
and has at least one inner thread adjoining the further fixing recess (14').

3. Regulation system according to one of the preceding claims,
**characterised in that**
a maximum extension of the plate base body (12) is maximally 20 mm.

4. Regulation system according to claim 1,
**characterised in that**
the at least one jawbone screw (16, 16') has at least one first thread (26) for screwing into a bone, and at least one second thread (28) for screwing into the inner thread of the implant plate device (10) that adjoins the fixing recess (14, 14'),
wherein a thread pitch of the first thread (26) differs from a thread pitch of the second thread (28).

5. Regulation system according to claim 4,
**characterized in that**
the thread pitch of the second thread (28) of the jawbone screw (16, 16') is greater than the thread pitch of the first thread (26) of the jawbone screw (16, 16').

6. Regulation system according to claim 1,
**characterized in that**
the orthodontic treatment apparatus (20) comprises at least one arch element (44), which is integrally connected with the plate base body (12) of the implant plate device (10).

7. Regulation system according to claim 1,
**characterized in that**
the at least one arch element (44) is welded or integrally connected to the plate base body (12) of the implant plate device (10).

8. Regulation system according to claim 1,
**characterised in that**
the orthodontic treatment apparatus (20) comprises at least one arch element (44), which has in at least one treatment zone a non-circular, at least approximately rectangular cross section.

9. Regulation system according to claim 1,
**characterised in that**
the orthodontic treatment apparatus (20) comprises at least one fastening unit (46, 46') for a fastening to a tooth (36), with at least one first fastening element (48, 48') for a direct fixing to a tooth (36) and with at least one second fastening element (50, 50'), which is connected to the first fastening element (48, 48'), for a connection to the arch element (44) that is rotationally fix or has a defined clearance.

10. Regulation system according to claim 9,
**characterised in that**
the second fastening elements (50, 50') comprise in each case a fixing sleeve (70) with an inner cross section that corresponds to pins (68, 68') of the fastening unit (46, 46'),
wherein the second fastening element (50, 50') comprises at least two further fixing sleeves (52, 52') which are configured to engage around the arch element (44) and which have an at least non-circular, in particular approximately rectangular, receiving region (54) for the arch element (44).

## Revendications

1. Système d'ajustage pour l'ajustage de positions de dents et/ou de mâchoires avec au moins un système d'implant (24)
comprenant un dispositif de plaque-implant (10) avec un corps de base de plaque (12), avec au moins une encoche de fixement (14, 14') introduite dans le corps de base de plaque (12) conçue pour recevoir une vis de mâchoire (16, 16') qui, pour un fixement du corps de base de plaque (12), est destinée à être vissée à travers l'encoche de fixement (14, 14') dans un os, en particulier un os de mâchoire, et avec au moins un filetage femelle jouxtant l'encoche de fixement (14, 14'), et comprenant au moins une vis de mâchoire (16, 16') qui, pour un fixement du dispositif de plaque-implant (10) sur un os, en particulier un os de mâchoire, est destinée à être vissée à travers l'encoche de fixement (14, 14') dans un os, en particulier un os de mâchoire,
et avec au moins un appareil de traitement orthodontique (20) fixé sur le dispositif de plaque-implant (10),
**caractérisé en ce que**
le dispositif de plaque-implant (10) comporte au moins une encoche fonctionnelle (18), introduite dans le corps de base de plaque (12), pour un couplage avec un appareil de traitement orthodontique (20) et/ou avec un gabarit d'alésage et/ou d'insertion (22),
le dispositif de plaque-implant (10) ayant au moins un filetage femelle jouxtant l'encoche fonctionnelle (18), qui est conçu pour un couplage en stabilité angulaire avec un appareil de traitement orthodontique (20) et/ou avec un gabarit d'alésage et/ou d'insertion (22).

2. Système d'ajustage selon la revendication 1,
**caractérisé en ce que**
le dispositif de plaque-implant
comporte une autre encoche de fixement (14') qui est introduite dans le corps de base de plaque (12), qui est disposée sur un côté de l'encoche fonctionnelle (18) opposé à l'encoche de fixement (14) et qui est conçue pour recevoir une vis de mâchoire (16') laquelle est, pour un fixement du corps de base de plaque (12), destinée à être vissée à travers l'encoche de fixement (14') dans un os, en particulier un os de mâchoire,
et comporte au moins un filetage femelle jouxtant l'autre encoche de fixement (14').

3. Système d'ajustage selon l'une des revendications précédentes,
**caractérisé en ce qu'**
une étendue maximale du corps de base de plaque (12) est maximalement 20 mm.

4. Système d'ajustage selon la revendication 1,
**caractérisé en ce que**
l'au moins une vis de mâchoire (16, 16') comprend au moins un premier filetage (26) pour un alésage dans un os et au moins un deuxième filetage (28) pour un alésage dans le filetage femelle du dispositif plaque-implant (10) jouxtant l'encoche de fixement (14, 14'),
où un pas de filetage du premier filetage (26) diffère d'un pas de filetage du deuxième filetage (28).

5. Système d'ajustage selon la revendication 4,
**caractérisé en ce que**
le pas de filetage du deuxième filetage (28) de la vis de mâchoire (16, 16') est supérieur au pas de filetage du premier filetage (26) de la vis de mâchoire (16, 16').

6. Système d'ajustage selon la revendication 1,
**caractérisé en ce que**
l'appareil de traitement orthodontique (20) comprend au moins un élément d'arc (44) lié intégralement au corps de base de plaque (12) du dispositif d'implant-plaque (10).

7. Système d'ajustage selon la revendication 1,
**caractérisé en ce que**
l'au moins un élément d'arc (44) est soudé ou intégralement lié au corps de base de plaque (12) du dispositif de plaque-implant (10).

8. Système d'ajustage selon la revendication 1,
**caractérisé en ce que**
l'appareil de traitement orthodontique (20) comprend au moins un élément d'arc (44) ayant dans au moins une zone de traitement une coupe transversale en faux rond, au moins approximativement rectangulaire.

9. Système d'ajustage selon la revendication 1,
**caractérisé en ce que**
l'appareil de traitement orthodontique (20) comprend au moins une unité de fixement (46, 46') pour un fixement sur une dent (36),
avec au moins un premier élément de fixement (48, 48') pour un fixement direct sur une dent (36) et avec au moins un deuxième élément de fixement (50, 50') lié au premier élément de fixement (48, 48'), pour une liaison à l'élément d'arc (44) qui est fixe en rotation ou avec jeu défini.

10. Système d'ajustage selon la revendication 9,
**caractérisé en ce que**
les deuxièmes éléments de fixement (50, 50') respectivement comprennent une douille de fixement (70) ayant une coupe transversale intérieure cadrant avec des tenons (68, 68') de l'unité de fixement (46, 46'), où
le deuxième élément de fixement (50, 50') comprend au moins deux autres douilles de fixement (52, 52') conçues pour saisir l'élément d'arc (44) et ayant une zone de logement (54) pour l'élément d'arc (44) qui est au moins en faux rond, en particulier approximativement rectangulaire.
